Europäisches Patentamt

European Patent Office

Office européen des brevets

(19)

(11) **EP 1 689 141 A1**

(12) **EUROPEAN PATENT APPLICATION**

(43) Date of publication:
**09.08.2006  Bulletin 2006/32**

(51) Int Cl.:
*H04L 27/26* (2006.01)     *H04L 25/02* (2006.01)
*H04B 7/08* (2006.01)

(21) Application number: **06100628.4**

(22) Date of filing: **19.01.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **20.01.2005  US 39220**

(71) Applicant: **TEXAS INSTRUMENTS INC.
Dallas, Texas 75265 (US)**

(72) Inventor: **Magee, David P.
Allen,
TX 75013-4634 (US)**

(74) Representative: **Holt, Michael et al
Texas Instruments Ltd.,
PO Box 5069
Northampton,
Northamptonshire NN4 7ZE (GB)**

(54) **A scalable pre-channel estimate phase corrector, method of correction and mimo communication system**

(57)     The invention provides a pre-channel estimate phase corrector for use with a multiple-input, multiple-output (MIMO) receiver (125) employing M receive antennas (R1- $R_M$), where M is at least two. In one embodiment, the pre-channel estimate phase corrector (135) includes a training sequence coordinator (136) configured to receive a pattern of training sequences from the M receive antennas during preamble symbol time periods. Additionally, the pre-channel estimate phase corrector also includes a phase calculator (137) coupled to the training sequence coordinator and configured to calculate phase corrections prior to establishing individual channel estimates based on the pattern of training sequences.

*FIG. 1*

EP 1 689 141 A1

**Description**

FIELD OF THE INVENTION

The invention is directed, in general, to communication systems and, more specifically, to a scalable pre-channel estimate phase corrector, a method of pre-channel estimate phase correction and a multiple-input, multiple-output (MIMO) communication system employing the corrector or the method.

BACKGROUND OF THE INVENTION

Multiple-input, multiple-output (MIMO) communication systems commonly employ a block structure wherein a MIMO transmitter (which is a cooperating collection of N single-dimension transmitters) sends a vector of symbol information. This symbol vector may represent one or more coded or uncoded SISO data symbols. A MIMO receiver (which is a cooperating collection of M single-dimension receivers, **M≥N**) receives one or more copies of this transmitted vector of symbol information. The performance of the entire communication system hinges on the ability of the receiver to reliably decode the symbol vector that was sent by the transmitter. This necessitates that the MIMO receiver determine reliable channel estimates associated with transmissions from the MIMO transmitter.

For example, a 2x2 MIMO communication system may transmit two independent and concurrent signals, employing two single-dimension transmitters having separate transmit antennas and two single-dimension receivers having separate receive antennas. Alternatively, the antennas could be derived from a single physical antenna that appropriately employs polarization. Two receive signals Y1(k), Y2(k) on the $k^{th}$ sub-carrier/tone following a Fast Fourier Transformation and assuming negligible intersymbol interference may be written as:

$$Y1(k) = H11(k)*X1(k) + H12(k)*X2(k) + n1(k)$$

$$Y2(k) = H21(k)*X1(k) + H22(k)*X2(k) + n2(k)$$

where X1(k) and X2(k) are two independent signals transmitted on the $k^{th}$ sub-carrier/tone from the first and second transmit antennas, respectively, and n1 and n2 are noise vectors associated with the two receive signals. The term Hij (k), where i=1,2 and j=1,2, incorporates gain and phase distortion associated with symbols transmitted on the $k^{th}$ sub-carrier/tone from transmit antenna j to receive antenna i. The channel gain and phase terms Hij(k) may also include gain and phase distortions due to signal conditioning stages such as filters and other analog electronics. The receiver is required to estimate the channel values Hij(k) to reliably decode the transmitted signals X1 (k) and X2(k).

To estimate the channel coefficients Hij(k) at the receiver, the transmitter and the receiver employ training sequences. These training sequences are predetermined and known at both the transmitter and the receiver. In an IEEE 802.11(a) compliant system, a training sequence (called a long sequence) is employed as part of a preamble to the transmission of data. This long sequence involves the transmission of a known sequence of data values, employing 52 excited tones (1 or -1), an unexcited tone (0) at DC and unexcited tones at each end of the spectrum, to provide a guard interval that is used to protect data tones from pass band filter effects.

With preambles employing time-switched, time-orthogonal, frequency-switched or frequency-orthogonal elements, different channel combinations are excited during each symbol of the training process. As a result, it can take up to N symbols before the independent channels can be determined for an NxM MIMO communication system. Between consecutive symbols however, errors in sampling clocks and carrier frequencies associated with the transmitting and receiving systems produce phase errors in the receive data. These phase errors typically degrade channel estimates and therefore provide a lower quality communication.

Accordingly, what is needed in the art is a way to determine enhanced channel estimates for transmissions associated with an NxM MIMO communication system.

SUMMARY OF THE INVENTION

To address the above-discussed deficiencies of the prior art, the invention provides a pre-channel estimate phase corrector for use with a multiple-input, multiple-output (MIMO) receiver employing M receive antennas, where M is at least two. In one embodiment, the pre-channel estimate phase corrector includes a training sequence coordinator configured to receive a pattern of training sequences from the M receive antennas during preamble symbol time periods.

Additionally, the pre-channel estimate phase corrector also includes a phase calculator coupled to the training sequence coordinator and configured to calculate phase corrections prior to establishing individual channel estimates based on the pattern of training sequences.

In another aspect, the invention provides a method of pre-channel estimate phase correction for use with a multiple-input, multiple-output (MIMO) receiver employing M receive antennas, where M is at least two. The method includes receiving a pattern of training sequences from the M receive antennas during preamble symbol time periods. The method also includes calculating phase corrections prior to establishing individual channel estimates based on the pattern of training sequences.

The invention also provides, in yet another aspect, a multiple-input, multiple-output (MIMO) communication system. The MIMO communication system includes a MIMO transmitter that employs N transmit antennas, where N is at least two, to transmit a pattern of training sequences, and a MIMO receiver that employs M receive antennas, where M is at least two, that provides pre-channel estimate phase corrections. The MIMO communication system also includes a pre-channel estimate phase corrector, coupled to the MIMO receiver, having a training sequence coordinator that receives a pattern of training sequences from the M receive antennas during preamble symbol time periods. The pre-channel estimate phase corrector also has a phase calculator, coupled to the training sequence coordinator, that calculates phase corrections prior to establishing individual channel estimates based on the pattern of training sequences thereby providing the pre-channel estimate phase corrections.

The foregoing has outlined preferred and alternative features of the invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the invention.

BRIEF DESCRIPTION OF THE DRAWINGS

For a more complete understanding of the invention, reference is now made to the following descriptions taken in conjunction with the accompanying drawings, in which:

FIG. 1 illustrates a system diagram of an embodiment of an NxM MIMO communication system constructed in accordance with the principles of the invention;
FIGS. 2A and 2B illustrate embodiments of first and second time-switched training sequence transmission frame formats employable with a pre-channel estimate phase corrector and constructed in accordance with the principles of the invention;
FIGS. 3A and 3B illustrate embodiments of first and second time-orthogonal training sequence transmission frame formats employable with a pre-channel estimate phase corrector and constructed in accordance with the principles of the invention;
FIGS. 4A and 4B illustrate embodiments of first and second frequency-switched training sequence transmission frame formats employable with a pre-channel estimate phase corrector and constructed in accordance with the principles of the invention;
FIGS. 5A and 5B illustrate embodiments of first and second frequency-orthogonal training sequence transmission frame formats employable with a pre-channel estimate phase corrector and constructed in accordance with the principles of the invention; and
FIG. 6 illustrates a flow diagram of an embodiment of a method of pre-channel estimate phase correction carried out in accordance with the principles of the invention.

DETAILED DESCRIPTION OF THE EMBODIMENTS

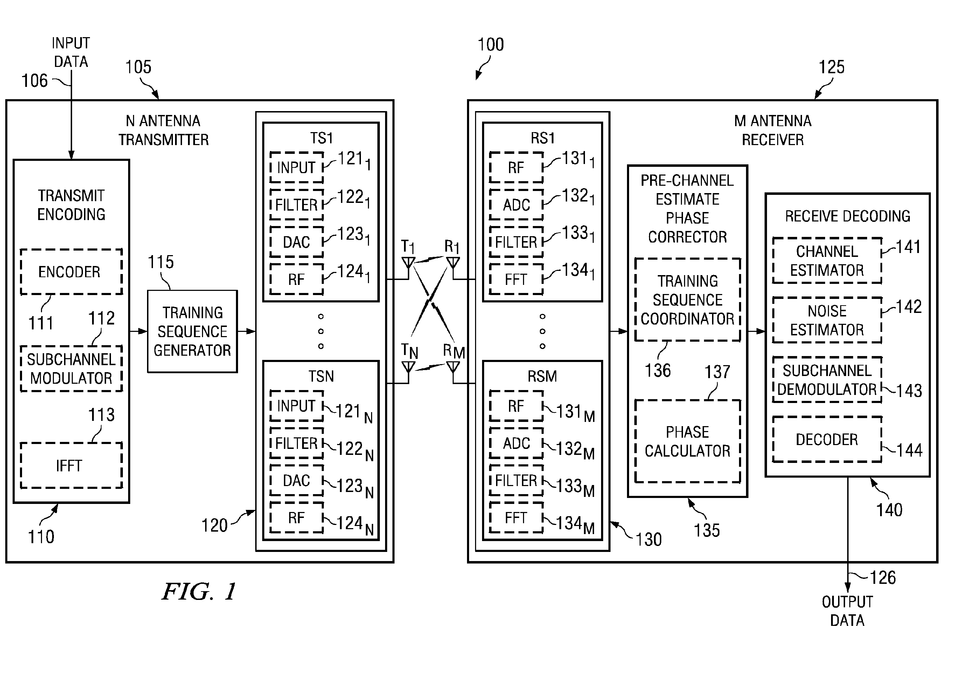

FIG. 1 illustrates an embodiment of an NxM MIMO communication system, generally designated 100, constructed in accordance with the principles of the invention. The MIMO communication system 100 includes a MIMO transmitter 105 that provides multiple concurrent transmissions and a MIMO receiver 125 that receives these transmissions. The MIMO transmitter 105 includes input data 106, a transmit encoding system 110, a training sequence generator 115, and a transmit system 120 having N transmit sections TS1-TSN coupled to N transmit antennas T1-TN, respectively. The MIMO receiver 125 includes a receive system 130 having M receive sections RS1-RSM respectively coupled to M receive antennas R1-RM, a pre-channel estimate phase corrector 135 and a receive decoding system 140 providing output data 126. In the embodiment of FIG. 1, N and M are at least two.

The transmit encoding system 110 includes an encoder 111, a subchannel modulator 112 and an Inverse Fast Fourier Transform (IFFT) section 113. The encoder 111, subchannel modulator 112 and IFFT section 113 prepare the input data and support the arrangement of preamble and signal information for transmission by the transmit system 120.

The training sequence generator 115 cooperates with the transmit encoding system 110 to generate a training sequence structure to be employed by the MIMO receiver 125 for pre-channel estimate phase correction. The training sequence generator 115 may employ a pattern of training sequences that includes time-switched training sequences, time-orthogonal training sequences, frequency-switched training sequences and frequency-orthogonal training sequences that typically form a part of a preamble structure.

The N transmit sections TS1-TSN include corresponding pluralities of N input sections $121_1$-$121_N$, N filters $122_1$-$122_N$, N digital-to-analog converters (DACs) $123_1$-$123_N$ and N radio frequency (RF) sections $124_1$-$124_N$, respectively. The N transmit sections TS1-TSN provide a time domain signal proportional with preamble information, signal information and input data for transmission by the N transmit antennas T1-TN, respectively. The M receive antennas R1-RM receive the transmission and provide it to the M respective receive sections RS1-RSM, which include corresponding M RF sections $131_1$-$131_M$, M analog-to-digital converters (ADCs) $132_1$-$132_M$, M filters $133_1$-$133_M$, and M Fast Fourier Transform (FFT) sections $134_1$-$134_M$, respectively. The M receive sections RS1-RSM employ a proper AGC level to provide a frequency domain digital signal to the receive decoding system 140. This digital signal contains proportional preamble information, signal information and input data. Setting of the proper AGC level is accomplished by establishing a proper ratio between a desired power level and a received power level for a selected ADC backoff level.

The pre-channel estimate phase corrector 135 includes a training sequence coordinator 136 and a phase calculator 137, which is coupled to the pilot sequence coordinator 136. The training sequence coordinator 136 receives a pattern of training sequences from the M receive antennas during preamble symbol time periods. The phase calculator 137 calculates phase corrections prior to establishing individual channel estimates based on the pattern of training sequences thereby providing pre-channel estimate phase corrections. The pattern of training sequences is selected from the group consisting of time-switched training sequences, time-orthogonal training sequences, frequency-switched training sequences and frequency-orthogonal training sequences.

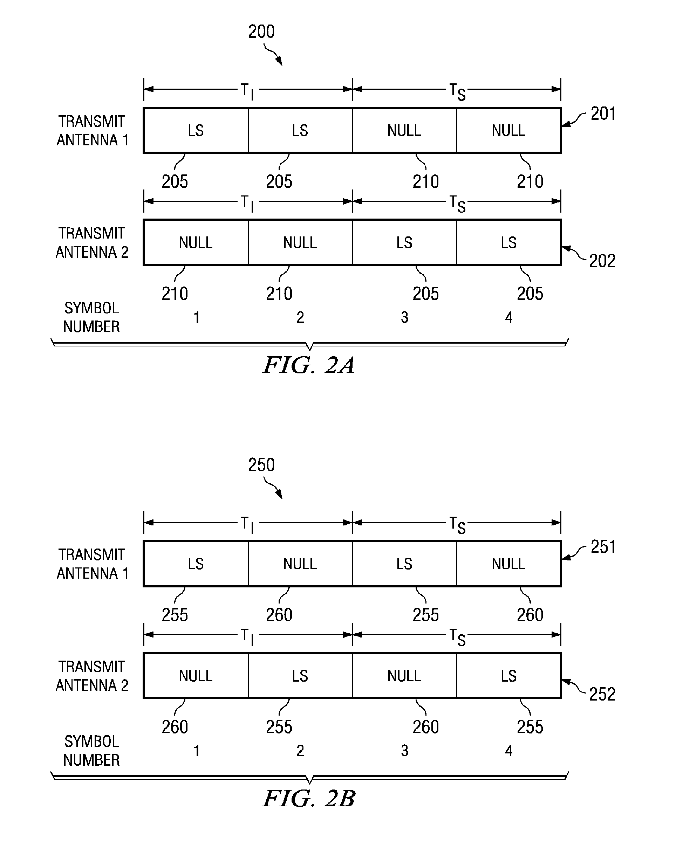

FIGS. 2A and 2B illustrate embodiments of first and second time-switched training sequence transmission frame formats, generally designated 200 and 250, employable with a pre-channel estimate phase corrector and constructed in accordance with the principles of the invention. The first and second time-switched training sequence transmission frame formats 200, 250 are associated with an NxM MIMO communication system having an N of two transmit antennas and an M of at least two receive antennas.

The first time-switched training sequence transmission frame format 200 includes first and second time-switched transmission frames 201, 202, and the second time-switched training sequence transmission frame format 250 includes alternative first and second time-switched transmission frames 251, 252 that are associated with the first and second transmit antennas, respectively, as shown. The first and second time-switched transmission frames 201, 202 and the alternative first and second time-switched transmission frames 251, 252 contain only time-switched portions of a MIMO preamble. In general, the first and second time-switched transmission frames 201, 202 and the alternative first and second time-switched transmission frames 251, 252 may also contain portions of an IEEE 802.11(a) standard preamble, for example, to form a preamble that is IEEE 802.11(a) backward compatible. However, in the illustrated embodiments, only the portion of the first and second transmission frame formats 200, 250 related to channel estimation has been included for simplicity.

The respective first and second time-switched transmission frames 201, 202, and 251, 252 employ an initial time period $T_I$ and a subsequent time period $T_s$, as shown. The initial time period $T_I$ corresponds to preamble symbol time periods 1 and 2, and the subsequent time period $T_s$ corresponds to preamble symbol time periods 3 and 4. As may be seen, the number of initial and subsequent time periods and corresponding preamble symbol time periods are each equal to two, which is the current value of N.

In FIGS. 2A and 2B, the respective first and second time-switched transmission frames 201, 202 and 251, 252 employ differing initial and subsequent sets of preambles during the initial and subsequent time periods $T_I$, $T_S$. In FIG. 2A, the initial set of preambles includes a training sequence 205 in the first transmission frame 201 and a null 210 in the second transmission frame 202 during preamble symbol time periods 1 and 2. Then, the subsequent set of preambles employs time-switching wherein the first transmission frame 201 includes the null 210 and the second transmission frame 202 includes the training sequence 205 during preamble symbol time periods 3 and 4.

In FIG. 2B, the initial set of preambles employs time-switching wherein the alternative first time-switched transmission frame 251 includes a training sequence 255 and the alternative second time-switched transmission frame 252 includes a null 260 during preamble symbol time period 1. Then, the alternate first transmission frame 251 includes the null 260 and the alternate second transmission frame 252 includes the training sequence 255 during the preamble symbol time period 2. The subsequent set of preambles is a repetition of the initial set of preambles during the preamble symbol time periods 3 and 4.

The nulls 210, 260 may be an un-modulated transmission or a transmission employing substantially zero modulation. Alternatively, the nulls 210, 260 may be zero functions that are, by definition, zero almost everywhere, or they may be null sequences of numerical values that converge to zero. Of course, the null format of each of the nulls 210, 260 may be other current or future-developed formats, as advantageously required by a particular application.

Each of the nulls 210, 260 provides the same effect, which is that of an inconsequential transmission. Additionally, although the forms of the nulls 210, 260 employed may typically be the same, their forms may also advantageously differ while maintaining the inconsequential transmission effect stated above.

With reference to FIG. 1 for the illustrated embodiment of FIG. 2A and during the preamble symbol time periods 1, 2, 3 and 4, the receive signal at each antenna m may be expressed as:

$$Y_m[k,1] = H_{m1}[k,1]LS[k] + n_m[k,1] \qquad (1a)$$

$$Y_m[k,2] = H_{m1}[k,2]LS[k] + n_m[k,2] \qquad (1b)$$

$$Y_m[k,3] = H_{m2}[k,3]LS[k] + n_m[k,3] \qquad (1c)$$

$$Y_m[k,4] = H_{m2}[k,4]LS[k] + n_m[k,4] \qquad (1d)$$

where in general $Y_m[k,b]$ is the received signal at the subchannel tone k for the symbol b, LS[k] represents the training sequence 205 and $n_m[k,b]$ are associated noise terms.

To improve channel estimation, the received data of like symbol transmissions can be averaged before the channel estimates are extracted. In the illustrated embodiment, symbols 1 and 2 would be averaged as would symbols 3 and 4. However, there is a phase error between symbols 1 and 2 as well as symbols 3 and 4 due to differences in the sampling clocks and carrier frequencies of associated transmitters and receivers. Removal of these phase errors before averaging typically provides enhanced channel estimates.

An embodiment of a pre-channel estimate phase corrector may employ the following steps:

1. Phase correct $Y_m[k,1]$ to symbol 2.

    a. Compute $e^{j\phi_k}$ from

$$e^{j\phi_k} = \text{atan2}\left(imag\left(Y_m[k,2]Y_m^*[k,1]\right), real\left(Y_m[k,2]Y_m^*[k,1]\right)\right)$$ at the training sequence indices, where atan2 is arctangent function of two variables.

    b. Evaluate $Y_m'[k,1] = e^{j\phi_k}Y_m[k,1]$ at the training sequence indices.

2. Average the received signals at symbol 2.

    a. Evaluate $\overline{Y}_m[k,2] = \frac{1}{2}\left(Y_m[k,2] + Y_m'[k,1]\right)$ at the training sequence indices.

3. Phase correct $\overline{Y}_m[k,2]$ to symbol 4.

    a. Use $e^{j\phi_k}$ from Step 1a as a phase error estimate.

    b. Evalute $\overline{Y}_m'[k,2] = e^{j2\phi_k}\overline{Y}_m[k,2]$ at the training sequence indices.

4. Phase correct $Y_m[k,3]$ to symbol 4.

    a. Compute $e^{j\phi_k}$ from

$$e^{j\phi_k} = \text{atan2}\left(imag\left(Y_m[k,4]Y_m^*[k,3]\right), real\left(Y_m[k,4]Y_m^*[k,3]\right)\right)$$ at the training sequence indices.

b. Evaluate $Y'_m[k,3] = e^{j\phi_k} Y_m[k,3]$ at the training sequence indices.

5. Average the received signals at symbol 4.

a. Evaluate $\overline{Y}_m[k,4] = \frac{1}{2}\left(Y_m[k,4] + Y'_m[k,3]\right)$ at the training sequence indices.

6. Use $\overline{Y}_m[k,4]$ and the known training sequence LS[k] to extract the individual channel estimates, $\hat{H}_{m2}[k,b]$ at symbol 4.

One skilled in the pertinent art can extend this time-switched training sequence analysis to the second time-switched training sequence transmission frame format 250 shown in FIG. 2B and generally, to an NxM MIMO communication system having an N and M greater than two.

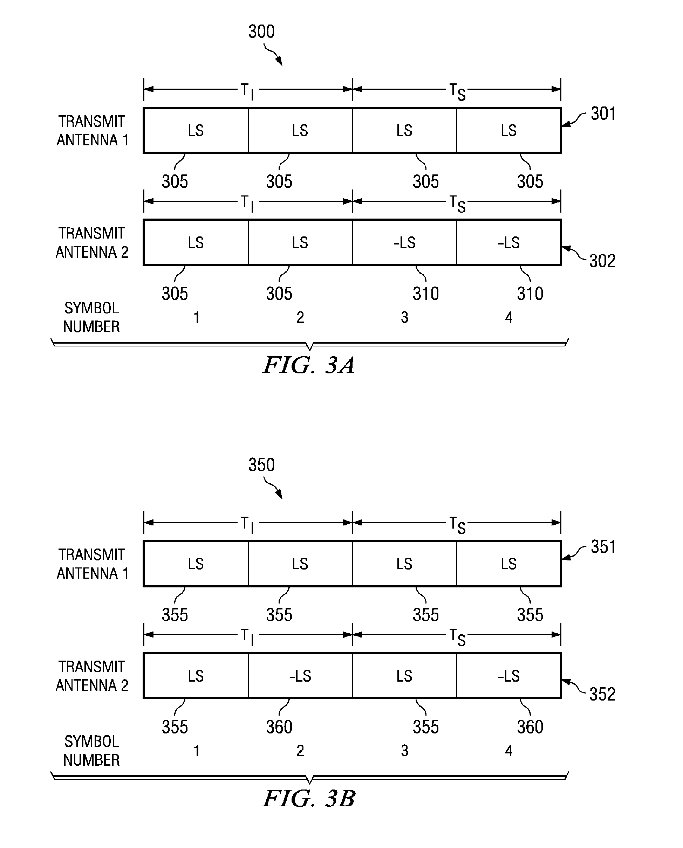

FIGS. 3A and 3B illustrate embodiments of first and second time-orthogonal training sequence transmission frame formats, generally designated 300 and 350, employable with a pre-channel estimate phase corrector and constructed in accordance with the principles of the invention. The first and second time-orthogonal training sequence transmission frame formats 300, 350 are associated with an NxM MIMO communication system also having an N of two transmit antennas and an M of at least two receive antennas.

The first time-orthogonal training sequence transmission frame format 300 includes first and second time-orthogonal transmission frames 301, 302, and the second time-orthogonal training sequence transmission frame format 350 includes alternative first and second time-orthogonal transmission frames 351, 352 that are associated with the first and second transmit antennas, respectively, as shown. The first and second time-orthogonal transmission frames 301, 302 and the alternative first and second time-orthogonal transmission frames 351, 352 contain only frequency-switched portions of a MIMO preamble.

As discussed with respect to FIGS. 2A and 2B, initial and subsequent time periods $T_I$, $T_S$ are employed, which respectively include preamble symbol time periods 1, 2 and 3, 4. The first and alternative first time-orthogonal transmission frames 301, 351 respectively provide training sequences 305 and 355 consistently during both the initial and subsequent time periods $T_I$, $T_S$, as shown. The second time-orthogonal transmission frame 302 provides the training sequence 305 during the initial time period $T_I$ and a training sequence negation 310 (i.e., a negation of the training sequence 305) during the subsequent time period $T_S$. Correspondingly, the alternate second time-orthogonal transmission frame 352 alternates the training sequence 355 with a training sequence negation 360, as shown.

With reference to FIG. 1 for the illustrated embodiment of FIG. 3A and during the preamble symbol time periods 1, 2, 3 and 4, the receive signal at each antenna m may be expressed as:

$$Y_m[k,1] = \left(H_{m1}[k,1] + H_{m2}[k,1]\right)LS[k] + n_m[k,1] \qquad (2a)$$

$$Y_m[k,2] = \left(H_{m1}[k,2] + H_{m2}[k,2]\right)LS[k] + n_m[k,2] \qquad (2b)$$

$$Y_m[k,3] = \left(H_{m1}[k,3] - H_{m2}[k,3]\right)LS[k] + n_m[k,3] \qquad (2c)$$

$$Y_m[k,4] = \left(H_{m1}[k,4] - H_{m2}[k,4]\right)LS[k] + n_m[k,4] \qquad (2d)$$

where in general $Y_m[k,b]$ is the received signal at the subchannel tone k for the symbol b, LS[k] represents the training sequence 305 and $n_m[k,b]$ are associated noise terms. To improve channel estimation and paralleling the discussion with respect to FIG. 2A, the receive signals of like symbol transmissions can be averaged before the channel estimates are extracted. As before, removal of the phase errors before averaging typically provides enhanced channel estimates. An embodiment of a pre-channel estimate phase corrector may employ the following steps:

1. Phase correct $Y_m[k,1]$ to symbol 2.

a. Compute $e^{j\phi_k}$ from

$$e^{j\phi_k} = \text{atan2}\left(imag\left(Y_m[k,2]Y_m^*[k,1]\right), real\left(Y_m[k,2]Y_m^*[k,1]\right)\right)$$ at the training sequence indices.

b. Evaluate $Y_m'[k,1] = e^{j\phi_k} Y_m[k,1]$ at the training sequence indices.

2. Average the received signals at symbol 2.

a. Evaluate $\overline{Y}_m[k,2] = \frac{1}{2}\left(Y_m[k,2] + Y_m'[k,1]\right)$ at the training sequence indices.

3. Phase correct $\overline{Y}_m[k,2]$ to symbol 4.

a. Use $e^{j\phi_k}$ from Step 1a as a phase error estimate.

b. Evaluate $\overline{Y}_m'[k,2] = e^{j2\phi_k} \overline{Y}_m[k,2]$ at the training sequence indices.

4. Phase correct $Y_m[k,3]$ to symbol 4.

a. Compute $e^{j\phi_k}$ from

$$e^{j\phi_k} = \text{atan2}\left(imag\left(Y_m[k,4]Y_m^*[k,3]\right), real\left(Y_m[k,4]Y_m^*[k,3]\right)\right)$$ at the training sequence indices.

b. Evaluate $Y_m'[k,3] = e^{j\phi_k} Y_m[k,3]$ at the training sequence indices.

5. Average the received signals at symbol 4.

a. Evaluate $\overline{Y}_m[k,4] = \frac{1}{2}\left(Y_m[k,4] + Y_m'[k,3]\right)$ at the training sequence indices.

6. Use $\overline{Y}_m[k,2]$ and $\overline{Y}_m[k,4]$ to extract the individual channel estimates, $\hat{H}_{mn}[k,b]$ at symbol 4 using the known training sequence LS[k] and simple addition and subtraction.

One skilled in the pertinent art can also extend this time-orthogonal training sequence analysis to the second time-orthogonal training sequence transmission frame format 350 shown in FIG. 3B and generally, to an NxM MIMO communication system having an N and M greater than two.

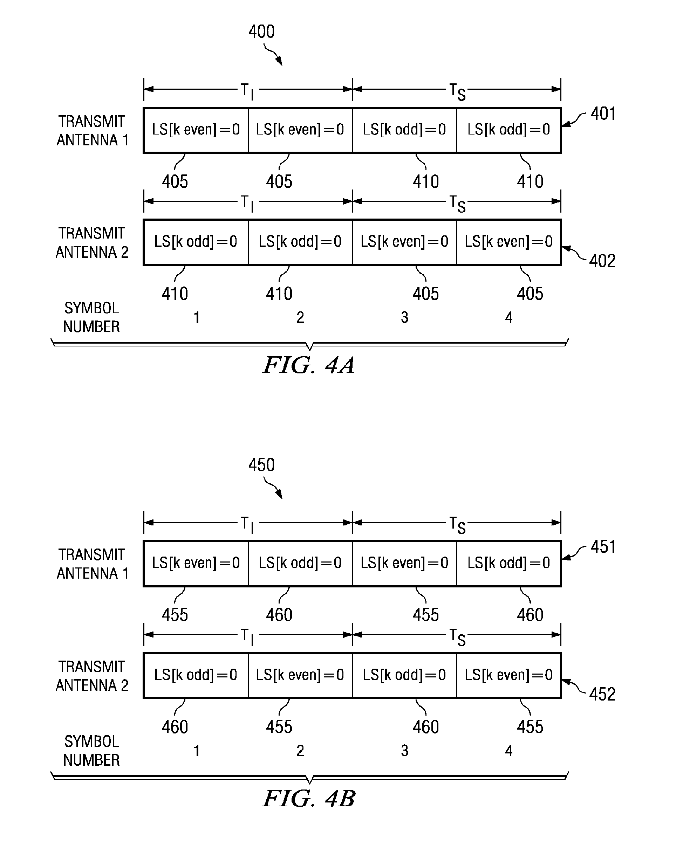

Turning now to FIGS. 4A and 4B, illustrated are embodiments of first and second frequency-switched training sequence transmission frame formats, generally designated 400 and 450, employable with a pre-channel estimate phase corrector and constructed in accordance with the principles of the invention. The first and second frequency-switched training sequence transmission frame formats 400, 450 are associated with an NxM MIMO communication system having an N of two transmit antennas and an M of at least two receive antennas. Additionally, they demonstrate a pattern of training sequences employed during initial and subsequent time periods $T_I$, $T_S$ wherein even tones (training sequences 405, 455) or odd tones (training sequences 410, 460) are set to zero in an opposing manner during each of preamble symbol time periods 1, 2, 3 and 4, as shown. This frequency-switched arrangement assures that only one transmit antenna is energizing a tone at any given time.

With reference to FIG. 1 for the illustrated embodiment of FIG. 4A and during preamble symbol time periods 1, 2, 3 and 4, the receive signal at each receive antenna m may be written as:

$$Y_m[k,1] = \begin{cases} H_{m1}[k,1]LS[k] + n_m[k,1] & \text{for} \quad k \in \{odd \quad indices\} \\ H_{m2}[k,1]LS[k] + n_m[k,1] & \text{for} \quad k \in \{even \quad indices\} \end{cases} \qquad (3a)$$

$$Y_m[k,2] = \begin{cases} H_{m1}[k,2]LS[k] + n_m[k,2] & \text{for} \quad k \in \{\text{odd indices}\} \\ H_{m2}[k,2]LS[k] + n_m[k,2] & \text{for} \quad k \in \{\text{even indices}\} \end{cases} \tag{3b}$$

$$Y_m[k,3] = \begin{cases} H_{m1}[k,3]LS[k] + n_m[k,3] & \text{for} \quad k \in \{\text{even indices}\} \\ H_{m2}[k,3]LS[k] + n_m[k,3] & \text{for} \quad k \in \{\text{odd indices}\} \end{cases} \tag{3c}$$

$$Y_m[k,4] = \begin{cases} H_{m1}[k,4]LS[k] + n_m[k,4] & \text{for} \quad k \in \{\text{even indices}\} \\ H_{m2}[k,4]LS[k] + n_m[k,4] & \text{for} \quad k \in \{\text{odd indices}\} \end{cases} \tag{3d}$$

where in general $Y_m[k,b]$ is the received signal at the subchannel tone k for the symbol b, LS[k] represents the training sequence employed and $n_m[k,b]$ are associated noise terms. To improve channel estimation and paralleling the discussion with respect to FIG. 2A, the receive signals of like symbol transmissions can be averaged before the channel estimates are extracted. As before, removal of the phase errors before averaging typically provides enhanced channel estimates.

An embodiment of a pre-channel estimate phase corrector may employ the following steps:

1. Phase correct $Y_m[k,1]$ with respect to symbol 2.

 a. Compute $e^{j\phi_k}$ from

$$e^{j\phi_k} = \text{atan2}\left(imag\left(Y_m[k,2]Y_m^*[k,1]\right), real\left(Y_m[k,2]Y_m^*[k,1]\right)\right)$$ at the even training sequence indices.

 b. Evaluate $Y_m'[k,1] = e^{j\phi_k}Y_m[k,1]$ at the even training sequence indices.

 c. Compute $e^{j\phi_k}$ from

$$e^{j\phi_k} = \text{atan2}\left(imag\left(Y_m[k,2]Y_m^*[k,1]\right), real\left(Y_m[k,2]Y_m^*[k,1]\right)\right)$$ at the odd training sequence indices.

 d. Evaluate $Y_m'[k,1] = e^{j\phi_k}Y_m[k,1]$ at the odd training sequence indices.

2. Average the received signals at symbol 2.

 a. Evaluate $\overline{Y}_m[k,2] = \frac{1}{2}\left(Y_m[k,2] + Y_m'[k,1]\right)$ at the training sequence indices.

3. Phase correct $\overline{Y}_m[k,2]$ with respect to symbol 4.

 a. Use $e^{j\phi_k}$ from Step 1a as a phase error estimate at the even training sequence indices.

 b. Evaluate $\overline{Y}_m'[k,2] = e^{j2\phi_k}\overline{Y}_m[k,2]$ at the even training sequence indices.

 c. Use $e^{j\phi_k}$ from Step 1c as a phase error estimate at the odd training sequence indices.

 d. Evaluate $\overline{Y}_m'[k,2] = e^{j2\phi_k}\overline{Y}_m[k,2]$ at the odd training sequence indices.

4. Phase correct $Y_m[k,3]$ with respect to symbol 4.

 a. Compute $e^{j\phi_k}$ from

$$e^{j\phi_k} = \text{atan2}\left(imag\left(Y_m[k,4]Y_m^*[k,3]\right), real\left(Y_m[k,4]Y_m^*[k,3]\right)\right)$$ at the even training sequence indices.

b. Evaluate $Y'_m[k,3] = e^{j\phi_k} Y_m[k,3]$ at the even training sequence indices.

c. Compute $e^{j\phi_k}$ from

$$e^{j\phi_k} = \mathrm{atan2}\big(imag\big(Y_m[k,4]Y_m^*[k,3]\big), real\big(Y_m[k,4]Y_m^*[k,3]\big)\big)$$ at the odd training sequence indices.

d. Evaluate $Y'_m[k,3] = e^{j\phi_k} Y_m[k,3]$ at the odd training sequence indices.

5. Average the received signals at symbol 4.

a. Evaluate $\overline{Y}_m[k,4] = \dfrac{1}{2}\big(Y_m[k,4] + Y'_m[k,3]\big)$ at the training sequence indices.

6. Use $\overline{Y}_m[k,2]$ and $\overline{Y}_m[k,4]$ to extract the individual channel estimates, $\hat{H}_{mn}[k,b]$ at symbol 4 using the known training sequence LS[k] and simple addition and subtraction.

Again, one skilled in the pertinent art can again extend this frequency-switched training sequence analysis to the second frequency-switched training sequence transmission frame 450 shown in FIG. 4B and generally, to an NxM MIMO communication system having an N and M greater than two.

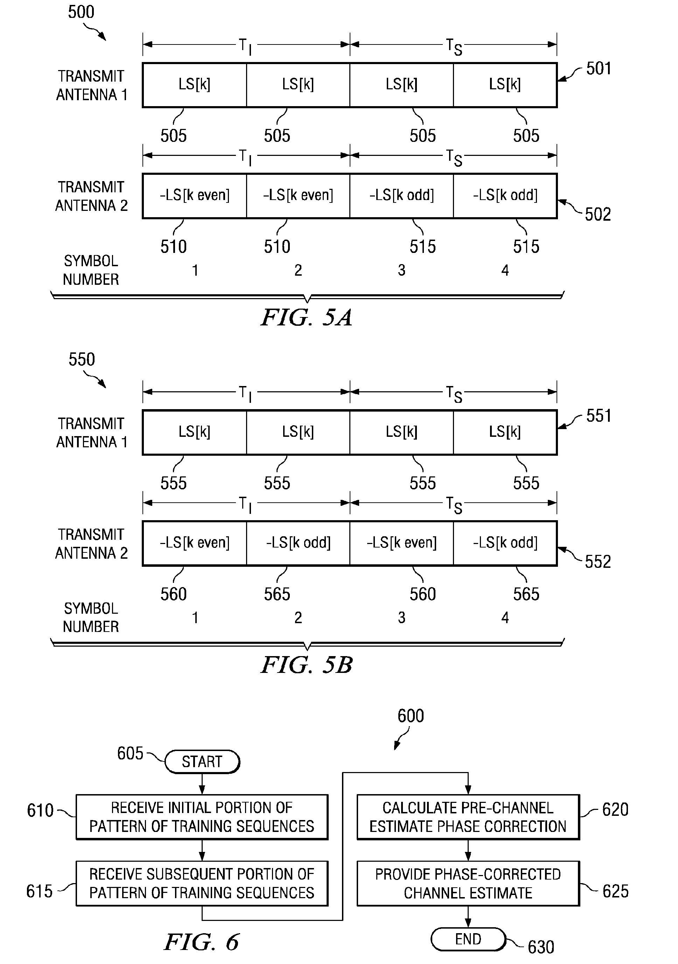

FIGS. 5A and 5B illustrate embodiments of first and second frequency-orthogonal training sequence transmission frame formats, generally designated 500 and 550, employable with a pre-channel estimate phase corrector and constructed in accordance with the principles of the invention. The first and second frequency-orthogonal training sequence transmission frame formats 500, 550 are associated with an NxM MIMO communication system having an N of two transmit antennas and an M of at least two receive antennas.

Training sequences 505 and 555 are consistently provided during both initial and subsequent time periods $T_I$, $T_S$ by first and alternative first frequency-orthogonal transmission frames 501, 551, as shown. Negations of these training sequences at the even tones (training sequences 510, 560) and at the odd tones (training sequences 515, 565) are provided by the second and alternative second frequency-orthogonal transmission frames 502, 552, as shown.

Again, with reference to FIG. 1 for the illustrated embodiment of FIG. 5A and during initial and subsequent data symbol periods $T_I$, $T_S$, the receive signal at each receive antenna m may be written as:

$$\mathrm{Y_m}[k,1] = \begin{cases} \big(\mathrm{H_{m1}}[k,1] - \mathrm{H_{m2}}[k,1]\big)\mathrm{LS}[k] + \mathrm{n_m}[k,1] & \text{for} \quad k \in \{\text{even} \quad \text{indices}\} \\ \big(\mathrm{H_{m1}}[k,1] + \mathrm{H_{m2}}[k,1]\big)\mathrm{LS}[k] + \mathrm{n_m}[k,1] & \text{for} \quad k \in \{\text{odd} \quad \text{indices}\} \end{cases} \quad (4a)$$

$$\mathrm{Y_m}[k,2] = \begin{cases} \big(\mathrm{H_{m1}}[k,2] - \mathrm{H_{m2}}[k,2]\big)\mathrm{LS}[k] + \mathrm{n_m}[k,2] & \text{for} \quad k \in \{\text{even} \quad \text{indices}\} \\ \big(\mathrm{H_{m1}}[k,2] + \mathrm{H_{m2}}[k,2]\big)\mathrm{LS}[k] + \mathrm{n_m}[k,2] & \text{for} \quad k \in \{\text{odd} \quad \text{indices}\} \end{cases} \quad (4b)$$

$$\mathrm{Y_m}[k,3] = \begin{cases} \big(\mathrm{H_{m1}}[k,3] - \mathrm{H_{m2}}[k,3]\big)\mathrm{LS}[k] + \mathrm{n_m}[k,3] & \text{for} \quad k \in \{\text{odd} \quad \text{indices}\} \\ \big(\mathrm{H_{m1}}[k,3] + \mathrm{H_{m2}}[k,3]\big)\mathrm{LS}[k] + \mathrm{n_m}[k,3] & \text{for} \quad k \in \{\text{even} \quad \text{indices}\} \end{cases} \quad (4c)$$

$$\mathrm{Y_m}[k,4] = \begin{cases} \big(\mathrm{H_{m1}}[k,4] - \mathrm{H_{m2}}[k,4]\big)\mathrm{LS}[k] + \mathrm{n_m}[k,4] & \text{for} \quad k \in \{\text{odd} \quad \text{indices}\} \\ \big(\mathrm{H_{m1}}[k,4] + \mathrm{H_{m2}}[k,4]\big)\mathrm{LS}[k] + \mathrm{n_m}[k,4] & \text{for} \quad k \in \{\text{even} \quad \text{indices}\} \end{cases} \quad (4d)$$

where in general $Y_m[k,b]$ is the received signal at the subchannel tone k for the symbol b, LS[k] represents the training sequence employed and $n_m[k,b]$ are associated noise terms. To improve channel estimation and paralleling the discussion with respect to FIG. 2A, the receive signals of like symbol transmissions can be averaged before the channel estimates are extracted. As before, removal of the phase errors before averaging typically provides enhanced channel estimates.

An embodiment of a pre-channel estimate phase corrector may employ the following steps:

1. Phase correct $Y_m[k,1]$ to symbol 2.

   a. Compute $e^{j\phi_k}$ from $e^{j\phi_k} = \mathrm{atan2}\big(imag\big(Y_m[k,2]Y_m^*[k,1]\big), real\big(Y_m[k,2]Y_m^*[k,1]\big)\big)$ at the even training sequence indices.

   b. Evaluate $Y_m'[k,1] = e^{j\phi_k} Y_m[k,1]$ at the even training sequence indices.

   c. Compute $e^{j\phi_k}$ from

$$e^{j\phi_k} = \mathrm{atan2}\big(imag\big(Y_m[k,2]Y_m^*[k,1]\big), real\big(Y_m[k,2]Y_m^*[k,1]\big)\big)$$ at the odd training sequence indices.

   d. Evaluate $Y_m'[k,1] = e^{j\phi_k} Y_m[k,1]$ at the odd training sequence indices.

2. Average the received signals at symbol 2.

   a. Evaluate $\bar{Y}_m[k,2] = \frac{1}{2}\big(Y_m[k,2] + Y_m'[k,1]\big)$ at the training sequence indices.

3. Phase correct $\bar{Y}_m[k,2]$ to symbol 4.

   a. Use $e^{j\phi_k}$ from Step 1a as a phase error estimate at the even training sequence indices.

   b. Evaluate $\bar{Y}_m'[k,2] = e^{j2\phi_k} \bar{Y}_m[k,2]$ at the even training sequence indices.

   c. Use $e^{j\phi_k}$ from Step 1c as a phase error estimate the odd training sequence indices.

   d. Evaluate $\bar{Y}_m'[k,2] = e^{j2\phi_k} \bar{Y}_m[k,2]$ at the odd training sequence indices.

4. Phase correct $Y_m[k,3]$ to symbol 4.

   a. Compute $e^{j\phi_k}$ from

$$e^{j\phi_k} = \mathrm{atan2}\big(imag\big(Y_m[k,4]Y_m^*[k,3]\big), real\big(Y_m[k,4]Y_m^*[k,3]\big)\big)$$ at the even training sequence indices.

   b. Evaluate $Y_m'[k,3] = e^{j\phi_k} Y_m[k,3]$ at the even training sequence indices.

   c. Compute $e^{j\phi_k}$ from

$$e^{j\phi_k} = \mathrm{atan2}\big(imag\big(Y_m[k,4]Y_m^*[k,3]\big), real\big(Y_m[k,4]Y_m^*[k,3]\big)\big)$$ at the odd training sequence indices.

   d. Evaluate $Y_m'[k,3] = e^{j\phi_k} Y_m[k,3]$ at the odd training sequence indices.

5. Average the received signals at symbol 4.

   a. Evaluate $\bar{Y}_m[k,4] = \frac{1}{2}\big(Y_m[k,4] + Y_m'[k,3]\big)$ at the training sequence indices.

6. Use $\bar{Y}'_m[k,2]$ and $\bar{Y}_m[k,4]$ to extract the individual channel estimates, $\hat{H}_{mn}[k,b]$ at symbol 4 using the known training sequence LS[k] and simple addition and subtraction.

7. Use $\bar{Y}_m[k,2]$ and $\bar{Y}_m[k,4]$ to extract the individual channel estimates, $\hat{H}_{mn}[k,b]$ at symbol 4 using the known training sequence LS[k] and simple addition and subtraction.

As before, one skilled in the pertinent art can extend this frequency-orthogonal training sequence analysis to the second frequency-orthogonal training sequence transmission frame format 550 shown in FIG. 5B and generally, to an NxM MIMO communication system having an N and M greater than two.

FIG. 6 illustrates a flow diagram of an embodiment of a method of pre-channel estimate phase correction, generally designated 600, carried out in accordance with the principles of the invention. The method 600 starts in a step 605 employing a MIMO receiver having M receive antennas, where M is at least two. Then, in a step 610, an initial portion of a pattern of training sequences is received during an initial time period from the M receive antennas, and a subsequent portion of the pattern of training sequences is received during as subsequent time period in a step 615 to form a basis for a pre-channel estimate phase correction.

The initial and subsequent portions of the pattern of training sequences employ at least two training sequences, and the pattern of training sequences is based on N transmit antennas employed to send the training sequences. Additionally, a number of preamble symbol time periods employed in the pattern of training sequences is also based on the N transmit antennas employed. The pattern of training sequences is selected from the group consisting of time-switched training sequences, time-orthogonal training sequences, frequency-switched training sequences and frequency-orthogonal training sequences. At least one pre-channel estimate phase correction is calculated in a step 620, and this pre-channel estimate phase correction is employed to provide at least one phase-corrected channel estimate in a step 625. The method ends in a step 630.

While the method disclosed herein has been described and shown with reference to particular steps performed in a particular order, it will be understood that these steps may be combined, subdivided, or reordered to form an equivalent method without departing from the teachings of the invention. Accordingly, unless specifically indicated herein, the order or the grouping of the steps is not a limitation of the invention.

In summary, embodiments of the invention employing a pre-channel estimate phase corrector, a method of pre-channel estimate phase correction and a MIMO communication system employing the corrector or the method have been presented. Advantages include the ability to phase correct the received signals resulting from time-switched, time-orthogonal, frequency-switched or frequency-orthogonal training sequences before they are averaged together, thereby removing a source of error. The phase-corrected signals may then be employed to provide enhanced channel estimates for the MIMO communication system. Additionally, the number of training sequence preambles employed and their associated number of symbol time periods may be scaled to accommodate an NxM MIMO communication system, where N and M are at least two.

Although the invention has been described in detail, those skilled in the art should understand that they can make various additions, deletions, substitutions and modifications herein, without departing from the scope of the claimed invention.

**Claims**

1. A method of pre-channel estimate phase correction for use with a multiple-input, multiple-output (MIMO) receiver employing M receive antennas, M being at least two, comprising:

   receiving a pattern of training sequences from said M receive antennas during preamble symbol time periods; and calculating phase corrections prior to establishing individual channel estimates based on said pattern of training sequences.

2. The method as recited in Claim 1, wherein said pattern of training sequences is selected from the group consisting of:

   time-switched training sequences;
   time-orthogonal training sequences;
   frequency-switched training sequences; and
   frequency-orthogonal training sequences.

3. The method as recited in Claim 1 or 2, wherein said pattern of training sequences is based on N transmit antennas, where N is at least two.

4. The method as recited in any of Claims 1 - 3, wherein a number of preamble symbol time periods employed in said pattern of training sequences is based on N transmit antennas, where N is at least two.

5. The method as recited in any of Claims 1 - 4, wherein said pattern of training sequences employs a half-pattern during an initial period of preamble symbols that repeats during a subsequent period of preamble symbols.

6. The method as recited in any of Claims 1 - 5, wherein said preamble symbol time periods are contiguous.

7. The method as recited in any of Claims 1 - 6, wherein at least a portion of said pattern of training sequences conforms to an IEEE 802.11 standard.

8. A pre-channel estimate phase corrector for use with a multiple-input, multiple-output (MIMO) receiver employing M receive antennas, M being at least two, comprising:

   a training sequence coordinator configured to receive a pattern of training sequences from said M receive antennas during preamble symbol time periods; and
   a phase calculator coupled to said training sequence coordinator and configured to calculate phase corrections prior to establishing individual channel estimates based on said pattern of training sequences.

9. The corrector as recited in Claim 8, wherein said pattern of training sequences is selected from the group consisting of:

   time-switched training sequences;
   time-orthogonal training sequences;
   frequency-switched training sequences; and
   frequency-orthogonal training sequences.

10. The corrector as recited in Claim 8 or 9, wherein said pattern of training sequences is based on N transmit antennas, where N is at least two.

11. The corrector as recited in any of Claims 8 - 10, wherein said pattern of training sequences employs a half-pattern during an initial period of preamble symbols that repeats during a subsequent period of preamble symbols.

12. A multiple-input, multiple-output (MIMO) communication system, comprising:

   a MIMO transmitter that employs N transmit antennas, N being at least two, to transmit a pattern of training sequences;
   a MIMO receiver that employs M receive antennas, M being at least two, and provides pre-channel estimate phase corrections; and
   a pre-channel estimate phase corrector that is coupled to said MIMO receiver, including:

      a training sequence coordinator that receives a pattern of training sequences from said M receive antennas during preamble symbol time periods, and
      a phase calculator, coupled to said training sequence coordinator, that calculates phase corrections prior to establishing individual channel estimates based on said pattern of training sequences thereby providing said pre-channel estimate phase corrections.

FIG. 1

FIG. 2A

FIG. 2B

FIG. 3A

FIG. 3B

FIG. 4A

FIG. 4B

500

|  | ← T$_I$ → | | ← T$_S$ → | |
|---|---|---|---|---|
| TRANSMIT ANTENNA 1 | LS[k] | LS[k] | LS[k] | LS[k] |

501

505    505    505    505

|  | ← T$_I$ → | | ← T$_S$ → | |
|---|---|---|---|---|
| TRANSMIT ANTENNA 2 | -LS[k even] | -LS[k even] | -LS[k odd] | -LS[k odd] |

502

510    510    515    515

SYMBOL NUMBER    1    2    3    4

## FIG. 5A

550

|  | ← T$_I$ → | | ← T$_S$ → | |
|---|---|---|---|---|
| TRANSMIT ANTENNA 1 | LS[k] | LS[k] | LS[k] | LS[k] |

551

555    555    555    555

|  | ← T$_I$ → | | ← T$_S$ → | |
|---|---|---|---|---|
| TRANSMIT ANTENNA 2 | -LS[k even] | -LS[k odd] | -LS[k even] | -LS[k odd] |

552

560    565    560    565

SYMBOL NUMBER    1    2    3    4

## FIG. 5B

600

605 — START

610 — RECEIVE INITIAL PORTION OF PATTERN OF TRAINING SEQUENCES

615 — RECEIVE SUBSEQUENT PORTION OF PATTERN OF TRAINING SEQUENCES

620 — CALCULATE PRE-CHANNEL ESTIMATE PHASE CORRECTION

625 — PROVIDE PHASE-CORRECTED CHANNEL ESTIMATE

630 — END

## FIG. 6

**European Patent Office**

## EUROPEAN SEARCH REPORT

Application Number

EP 06 10 0628

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/131012 A1 (MODY APURVA ET AL) 8 July 2004 (2004-07-08) * abstract * * paragraph [0004] - paragraph [0008] * * paragraph [0013] * * paragraph [0026] * * paragraph [0032] - paragraph [0038] * * paragraph [0043] * * paragraph [0049] * * paragraph [0065] - paragraph [0068] * ----- | 1-12 | INV. H04L27/26 H04L25/02 H04B7/08 |
| X | GB 2 326 069 A (* LSI LOGIC CORPORATION; * BRITISH BROADCASTING CORPORATION) 9 December 1998 (1998-12-09) * abstract * * page 2, line 9 - page 3, line 4 * * page 3, line 23 - page 4, line 2 * * page 9, line 7 - page 12, line 15 * * page 14, line 25 - page 15, line 28 * ----- | 1-12 | |
| X | TROYA A ET AL: "Simplified residual phase correction mechanism for the IEEE 802.11a standard" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 1137-1141Vol2, XP010700809 ISBN: 0-7803-7954-3 * abstract * * I. Introduction * * III. Channel estimator * * IV. Residual phase error: estimation and correction * * Figure 1 * ----- -/-- | 1-12 | TECHNICAL FIELDS SEARCHED (IPC) H04L H04B |

The present search report has been drawn up for all claims

| Place of search | Date of completion of the search | Examiner |
|---|---|---|
| Munich | 28 June 2006 | Palacián Lisa, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 10 0628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 799 597 A (MITSUBISHI ELECTRIC INFORMATION TECHNOLOGY CENTRE EUROPE BV) 13 April 2001 (2001-04-13) * page 1, line 1 - line 6 * * page 3, line 13 - line 16 * * page 4, line 29 - line 31 * * page 5, line 23 - line 28 * * page 8, line 9 - page 9, line 29 * * page 12, line 9 - page 13, line 13 * ----- | 1-12 | |

TECHNICAL FIELDS
SEARCHED      (IPC)

The present search report has been drawn up for all claims

| Place of search | Date of completion of the search | Examiner |
|---|---|---|
| Munich | 28 June 2006 | Palacián Lisa, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 10 0628

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2006

| Patent document cited in search report | | Publication date | Patent family member(s) | | Publication date |
|---|---|---|---|---|---|
| US 2004131012 | A1 | 08-07-2004 | NONE | | |
| GB 2326069 | A | 09-12-1998 | NONE | | |
| FR 2799597 | A | 13-04-2001 | JP<br>US | 2001119369 A<br>6876672 B1 | 27-04-2001<br>05-04-2005 |

EPO FORM P0459

For more details about this annex : see Official Journal of the European Patent Office, No. 12/82